# EUROPEAN PATENT APPLICATION

(11) **EP 4 296 113 A1**
(43) Date of publication of application: **27.12.2023**
(21) Application number: 22755544.8
(22) Date of filing: 16.02.2022
(51) Int. Cl.: B60L 53/62, B60L 58/15, H02J 7/00

(54) **VEHICLE CHARGING CURRENT ADJUSTMENT METHOD AND APPARATUS**

(30) Priority: 22.02.2021 CN 202110196517
(71) Applicant: Beijing CHJ Information Technology Co., Ltd., Beijing 101399 (CN)
(72) Inventor: GUO, Qingfeng, Beijing 101399 (CN)
(74) Representative: Maiwald GmbH
(86) International application number: PCT/CN2022/076512
(87) International publication number: WO 2022/174771

(57) **Abstract**

A vehicle charging current adjustment method and apparatus, a vehicle controller and an electric vehicle. The method comprises: acquiring a request charging current value of a battery and an actual charging current value of the battery (S101); determining a current adjustment value of the battery on the basis of the request charging current value of the battery and the actual charging current value of the battery (S 102); determining whether an absolute value of the current adjustment value is greater than a preset adjustment threshold value (S103); and when the absolute value of the current adjustment value is greater than the preset adjustment threshold value, determining a vehicle charging current value on the basis of the request charging current value, the current adjustment value and an accessory current consumption value (S104).

## Description

### CROSS-REFERENCE TO RELATED APPLICATIONS

This application is based on and claims priority to Chinese Patent Application No. 202110196517.2, filed on February 22, 2021, the entire contents of which are incorporated herein by reference.

### TECHNICAL FIELD

The present disclosure relates to a field of battery charging technologies, and particularly to a method and an apparatus for adjusting a vehicle charging current, a vehicle control unit and an electric vehicle.

### BACKGROUND

Electric vehicles are vehicles with taking rechargeable batteries as their energy source and converting output electrical energy into mechanical energy for movement.

When charging a battery through a charging station, a request for a vehicle charging current is sent to the charging station. After receiving the request for the vehicle charging current, the charging station charges the battery based on the requested vehicle charging current. When the vehicle is in charging, a charging request current sent by the vehicle to the charging station is a sum of a request charging current of the battery and a calculated consumption current of accessories. In a case that the calculated current value of the accessories is different from an actually consumed current value, it may cause an actual current entering the battery to be inconsistent with the request charging current of the battery. In a case that the actual current entering the battery is greater than the request charging current of the battery, especially when a temperature of the battery is below 0 degrees Celsius, it may cause overcharging and damage the battery. In a case that the actual current entering the battery is smaller than the request charging current of the battery, a charging time may be prolonged.

### SUMMARY

The purpose of the present disclosure is to provide a method and an apparatus for adjusting a vehicle charging current, a vehicle control unit and an electric vehicle, capable of solving the abovementioned at least one technical problem. The specific solution is as follow:
According to a first aspect of a specific implementation of the present disclosure, a method for adjusting a vehicle charging current is provided in the present disclosure, and includes:
acquiring a request charging current value and an actual charging current value of a battery;
determining a current adjustment value of the battery based on the request charging current value and the actual charging current value;
checking whether an absolute value of the current adjustment value is greater than a preset adjustment threshold; and
in response to the absolute value of the current adjustment value being greater than the preset adjustment threshold, determining a vehicle charging current value based on the request charging current value, the current adjustment value and a consumed current value of accessories, in which, the consumed current value of the accessories is a current value consumed by circuits other than the battery.

Alternatively, in response to the absolute value of the current adjustment value being greater than the preset adjustment threshold, determining the vehicle charging current value based on the request charging current value, the current adjustment value and the consumed current value of the accessories includes:
in response to the absolute value of the current adjustment value being greater than the preset adjustment threshold, determining that the vehicle charging current value is equal to a sum of the request charging current value of the battery, the current adjustment value, and the consumed current value of the accessories.

Alternatively, the method further includes:
in response to the absolute value of the current adjustment value being less than or equal to the preset adjustment threshold, determining that the vehicle charging current value is equal to a sum of the request charging current value of the battery and the consumed current value of the accessories.

Alternatively, before acquiring the request charging current value and the actual charging current value of the battery, the method further includes:
acquiring fault information of the vehicle, in which, the fault information includes information that affects the consumed current value of the accessories or charging fault information;
checking whether the fault information includes the charging fault information;
in response to the fault information including the charging fault information, sending an instruction for terminating charging the battery.

Alternatively, the method further includes:
in response to the fault information including the information that affects the consumed current value of the accessories, calculating the consumed current value of the accessories based on the information that affects the consumed current value of the accessories.

Alternatively, the information that affects the consumed current value of the accessories includes frame dropping information of at least one high voltage electrical component and/or frame dropping information of at least one low voltage electrical component. Calculating the consumed current value of the accessories based on the information that affects the consumed current value of the accessories includes: calculating the consumed current value of the accessories based on the at least one high voltage electrical component and/or the at least one low voltage electrical component, and a component with normally receiving a consumption current.

Alternatively, calculating the consumed current value of the accessories based on the at least one high voltage electrical component and/or the at least one low voltage electrical component, and the component with normally receiving the consumption current includes: acquiring a consumed current value of the component with normally receiving the consumption current; acquiring a previous consumed current value of the at least one high voltage electrical component and/or the at least one low voltage electrical component; determining a sum of the consumed current value of the component with normally receiving the consumption current and the previous consumed current value of the at least one high voltage electrical component and/or the at least one low voltage electrical component as the consumed current value of the accessories.

According to a second aspect of a specific implementation of the present disclosure, an apparatus for adjusting a vehicle charging current is provided in the present disclosure, and includes:
an acquiring unit, configured to acquire a request charging current value and an actual charging current value of a battery;
a determining unit, configured to determine a current adjustment value of the battery based on the request charging current value and the actual charging current value;
a checking unit, configured to check whether an absolute value of the current adjustment value is greater than a preset adjustment threshold; and
an adjusting unit, configured to, in response to the absolute value of the current adjustment value being greater than the preset adjustment threshold, determine a vehicle charging current value based on the request charging current value, the current adjustment value and a consumed current value of accessories, in which, the consumed current value of the accessories is a current value consumed by circuits other than the battery.

Alternatively, the adjusting unit is further configured to:
in response to the absolute value of the current adjustment value being greater than the preset adjustment threshold, determine that the vehicle charging current value is equal to a sum of the request charging current value of the battery, the current adjustment value, and the consumed current value of the accessories.

Alternatively, the adjusting unit is further configured to:
in response to the absolute value of the current adjustment value being less than or equal to the preset adjustment threshold, determine that the vehicle charging current value is equal to a sum of the request charging current value of the battery and the consumed current value of the accessories.

Alternatively, the apparatus further includes a diagnosis unit. The diagnosis unit is configured to:
acquire fault information of the vehicle, in which, the fault information includes information that affects the consumed current value of the accessories or charging fault information;
check whether the fault information includes the charging fault information;
in response to the fault information including the charging fault information, send an instruction for terminating charging the battery.

Alternatively, the diagnosis unit is further configured to:
in response to the fault information including the information that affects the consumed current value of the accessories, calculate the consumed current value of the accessories based on the information that affects the consumed current value of the accessories.

Alternatively, the information that affects the consumed current value of the accessories includes frame dropping information of at least one high voltage electrical component and/or frame dropping information of at least one low voltage electrical component. The diagnosis unit is further configured to: calculate the consumed current value of the accessories based on the at least one high voltage electrical component and/or the at least one low voltage electrical component, and a component with normally receiving a consumption current.

According a third aspect, the present disclosure provides a vehicle control unit, having one or more instructions stored thereon. The one or more instructions is configured to implement the method according to the first aspect when executed by the vehicle control unit.

According a fourth aspect, the present disclosure provides an electric vehicle, including the vehicle control unit according to the third aspect.

The above solution according to embodiments of the present disclosure at least has the following beneficial effect compared with the related art.

According to the present disclosure, the current adjustment value is obtained based on the request charging current value and the actual charging current value, whether the consumed current value of the accessories is consistent with an actually consumed current is checked based on the current adjustment value. In response to the consumed current value of the accessories being inconsistent with the actually consumed current, the charging current requested by the vehicle is dynamically compensated. In response to the actual current of the battery being greater than the request current of the battery, a compensation value may cause the battery to be prevented from overcharge. In response to the actual current of the battery being less than the request current of the battery, the compensation value may cause a charging time to be reduced and a charging rate to be improved. In a case that a message for a calculated current of the accessories occurs frame dropping, nodes communicate normally, and the vehicle allows charging, the charging can still be performed, improving the charging rate and user experience.

### BRIEF DESCRIPTION OF THE DRAWINGS

The above and other features, advantages and aspects of embodiments of the present disclosure will become apparent in combination with the accompanying drawings and referring to the following specific implementations. The same or similar elements are denoted by like reference numerals throughout the accompanying drawings. It should be understood that the accompanying drawings are illustrative, and components and elements may not necessarily be drawn to scale. In the accompanying drawings:
FIG. 1 is a flowchart illustrating a method for adjusting a vehicle charging current according to an embodiment of the present disclosure.
FIG. 2 is a schematic diagram illustrating an adjusted charging current value of a vehicle.
FIG. 3 is a flowchart illustrating a method for adjusting a vehicle charging current according to an embodiment of the present disclosure.
FIG. 4 is a block diagram illustrating an apparatus for adjusting a vehicle charging current according to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure can be implemented in various forms and should not be construed as limited to the embodiments described herein. On the contrary, these embodiments are provided for a more thorough and complete understanding of the present disclosure. It should be understood that the accompanying drawings and embodiments in the present disclosure are only for illustrative purposes and are not intended to limit the scope of protection of the present disclosure.

It should be understood that the various steps described in method implementations of the present disclosure can be executed in different orders and/or in parallel. In addition, the method implementations may include additional steps and/or omitting the steps shown for execution. The scope of the present disclosure is not limited in this aspect.

The following provides a detailed explanation of optional embodiments in the present disclosure, in combination with the accompanying drawings.

The present disclosure provides a first embodiment, that is, an embodiment of a method for adjusting a vehicle charging current.

### Embodiment one:

Generally, when an electric vehicle is in charging, a vehicle control unit (VCU) controls the battery control unit (BCU) to power on, and a charging process is initiated through a DC-DC converter (DCDC). After the charging of the electric vehicle is completed, an electronic battery sensor (EBS) monitors a battery level. When an SOC (state of charge) or a voltage of the battery is detected to be relatively low, the electronic battery sensor EBS wakes up the vehicle control unit VCU through a LIN (local interconnect network) bus. The vehicle control unit VCU controls the battery control unit BCU to power on and initiates charging the battery through the DC-DC converter DCDC. In response to not satisfying that the SOC (state of charge) or the voltage of the battery is detected to be relatively low, the charging is not performed and the electronic battery sensor EBS is controlled to sleep again.

During a usage process of the electric vehicle, it is required to charge the battery through a charging station. During the charging process, the electric vehicle sends a request for a vehicle charging current to the charging station. After receiving the request for the vehicle charging current, the charging station outputs the charging current based on the requested vehicle charging current to charge the battery of the electric vehicle. When the vehicle is in charging, the request for the vehicle charging current sent by the vehicle to the charging station is a sum of a request charging current of the battery and a calculated consumption current of accessories.

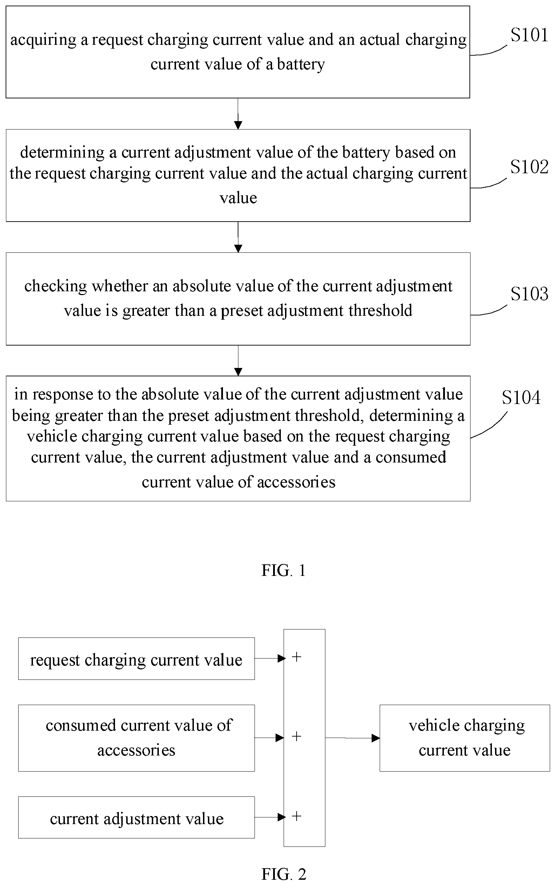

As illustrated in FIG. 1, a method for adjusting a vehicle charging current includes the following method steps.

At step S101, a request charging current value and an actual charging current value of a battery are acquired.

The vehicle periodically sends the request charging current value to the charging station during charging. After receiving the request charging current value, the charging station charges the battery of the vehicle according to a request. In an ideal state, a vehicle charging current value includes a sum of the request charging current value of the battery and a consumed current value of accessories obtained by calculation, and the request charging current value of the battery is equal to an actual charging current value of the battery. The consumed current value of the accessories is a current value consumed by circuits other than the battery. The circuits other than the battery include all circuits that are still active during the charging process, such as a boosting charging circuit, a current limiting circuit, etc., specifically includes a compressor circuit and a DC converter circuit, etc. However, during charging, in response to the consumed current of the accessories is inconsistent with the actually consumed current of the electric vehicle, it will cause the actual charging current of the battery to be inconsistent with the request charging current. This is a dynamic process. At this point, the actual charging current value of the battery and the request charging current value of the battery may be acquired through the vehicle control unit VCU. The actual charging current value of the battery refers to a current value obtained at a charging input port of a battery pack, while the request charging current value of the battery is acquired by acquiring an instruction for requesting a current sent by the battery.

At step S102, a current adjustment value of the battery is determined based on the request charging current value and the actual charging current value.

The current adjustment value of the battery is obtained based on the request charging current value and the actual charging current value. The current adjustment value is a difference between the request charging current value and the actual charging current value.

In response to existing the current adjustment difference, it indicates that the consumed current value of the accessories is inconsistent with the actually consumed current value, causing inconsistency between the request charging current value and the actual charging current value. The purpose of an embodiment of the present disclosure is to maintain consistency between the request charging current value and the actual charging current value by adjusting the current difference.

It can be understood that the current adjustment difference is equal to a difference with subtracting the actual charging current value from the request charging current value. The current adjustment difference may be positive or negative.

At step S103, it is checked whether an absolute value of the current adjustment value is greater than a preset adjustment threshold.

The preset adjustment threshold is used to check whether to adjust the actual charging current value. The specific value is not limited and can be determined based on an actual charging situation. For example, the threshold may be any value within 1A to 2A, which is not specifically limited herein.

At step S104, in response to the absolute value of the current adjustment value being greater than the preset adjustment threshold, a vehicle charging current value is determined based on the request charging current value, the current adjustment value and a consumed current value of accessories. The consumed current value of the accessories is a current value consumed by circuits other than the battery.

A corresponding adjustment to battery charging includes providing an additional supplementary current on the actual charging current value or branching off the actual charging current value.

As illustrated in FIG. 2, after adjustment, the vehicle charging current value includes a sum of the request charging current value, the consumed current value of the accessories, and the current adjustment value.

With setting the current adjustment value to the current adjustment difference, the actual current value charged into the battery is caused to be equal to the request charging current value of the battery after adjustment. That is, after adjustment, the request charging current value is equal to a sum of the actual charging current value and the current adjustment value.

At step S105 (not shown), in response to the absolute value of the current adjustment difference being less than or equal to the preset adjustment threshold, the vehicle charging current value includes a sum of the request charging current value and the consumed current value of the accessories.

In response to the absolute value of the current adjustment difference being less than or equal to the preset adjustment threshold, the actual charging current value is not adjusted in an embodiment of the present disclosure. For example, when the absolute value of the current adjustment difference is less than or equal to 1A, the actual charging current value is not adjusted.

In an embodiment of the present disclosure, the current adjustment value is obtained based on the request charging current value and the actual charging current value, whether the consumed current value of the accessories is consistent with an actually consumed current is checked based on the current adjustment value. In response to the consumed current value of the accessories being inconsistent with the actually consumed current, the charging current requested by the vehicle is dynamically compensated. In response to the actual current of the battery being greater than the request current of the battery, a compensation value may cause the battery to be prevented from overcharge.

### Embodiment two:

As this embodiment of the present disclosure is a further improvement based on Embodiment one, explanation on the same steps and the meanings of the same names is the same as Embodiment one, which will not be repeated herein.

At step S111, a request charging current value and an actual charging current value of a battery are acquired.

At step S112, a current adjustment value of the battery is acquired based on the request charging current value and the actual charging current value. The current adjustment value of the battery is equal to a current adjustment difference of the battery calculated based on the request charging current value and the actual charging current value.

At step S113, it is checked whether an absolute value of the current adjustment value is greater than a preset adjustment threshold.

At step S114, in response to the absolute value of the current adjustment value being greater than the preset adjustment threshold and the current adjustment value being greater than zero, the vehicle charging current value is equal to a sum of the request charging current value of the battery, the current adjustment value, and the consumed current value of the accessories. The consumed current value of the accessories is a current value consumed by circuits other than the battery.

When the absolute value of the current adjustment value is greater than the preset adjustment threshold and the current adjustment value is greater than zero, it indicates that the request charging current value is greater than the actual charging current value, which can easily lead to an extension of a charging time. Therefore, supplementary charging is required to be performed on the battery to ensure a normal charging rate and a normal charging time, and improve user experience.

At step S115, in response to the absolute value of the current adjustment value being less than or equal to the preset adjustment threshold, the vehicle charging current value is equal to a sum of the request charging current value of the battery and the consumed current value of the accessories. The consumed current value of the accessories is a current value consumed by circuits other than the battery. Regard this, due to a small offset, dynamic compensation may not be performed to reduce an overall load of the charging circuit.

### Embodiment three:

As this embodiment of the present disclosure is a further improvement based on Embodiment one, explanation on the same steps and the meanings of the same names is the same as Embodiment one, which will not be repeated herein.

At step S121, a request charging current value and an actual charging current value of a battery are acquired.

At step S122, a current adjustment value of the battery is acquired based on the request charging current value and the actual charging current value. The current adjustment value of the battery is equal to a current adjustment difference of the battery calculated based on the request charging current value and the actual charging current value.

At step S123, it is checked whether an absolute value of the current adjustment value is greater than a preset adjustment threshold.

At step S124, in response to the absolute value of the current adjustment value being greater than the preset adjustment threshold and the current adjustment value being greater than zero, the vehicle charging current value is equal to a sum of the request charging current value of the battery, the current adjustment value, and the consumed current value of the accessories. The consumed current value of the accessories is a current value consumed by circuits other than the battery. The accessories are controlled to branch off the actual charging current value of the battery based on the current adjustment value.

When the absolute value of the current adjustment value is greater than the preset adjustment threshold and the current adjustment value is less than zero, it indicates that the request charging current value is less than the actual charging current value, which can easily lead to overcharging of the battery. Therefore, branching off the actual charging current value is required to be performed on the battery to prevent overcharging, ensure a normal charging rate and a normal charging time, and improve user experience. Especially when a temperature of the battery is below zero, the battery may be maintained in good condition.

At step S125, in response to the absolute value of the current adjustment value being less than or equal to the preset adjustment threshold, the vehicle charging current value is equal to a sum of the request charging current value of the battery and the consumed current value of the accessories. The consumed current value of the accessories is a current value consumed by circuits other than the battery. Regard this, due to a small offset, dynamic compensation may not be performed to reduce an overall load of the charging circuit.

### Embodiment four:

As this embodiment of the present disclosure is a further improvement based on Embodiment one, explanation on the same steps and the meanings of the same names is the same as Embodiment one, which will not be repeated herein.

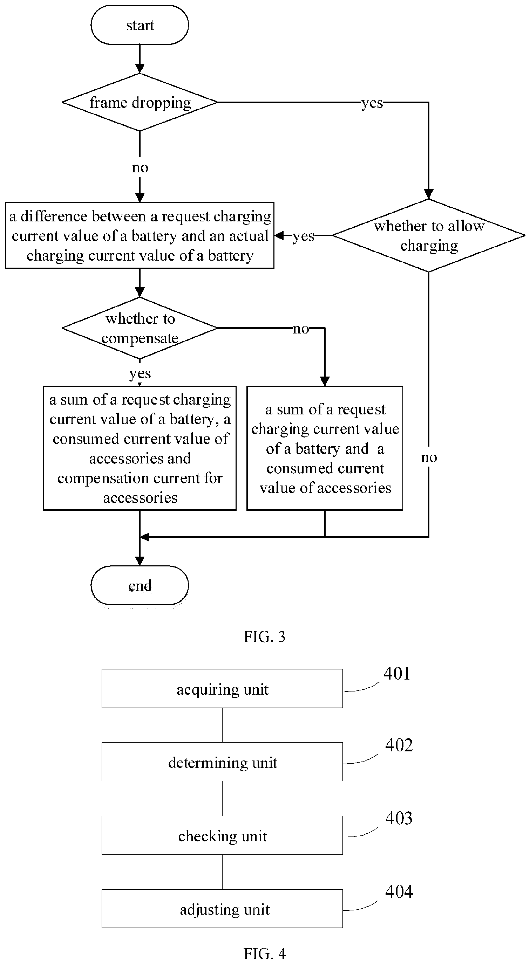

Before acquiring the request charging current value, the actual charging current value of the battery and the consumed current value of the accessories obtained from accessories calculation in the above embodiment, as illustrated in FIG. 3, the method may further include the following steps.

At step S 100-1, fault information of the vehicle is acquired. The fault information includes information that affects the consumed current value of the accessories or charging fault information.

Acquiring the fault information of the vehicle refers to acquiring whether there is a frame dropping in vehicle communication information. In response to the frame dropping, it indicates that the vehicle has the fault information. A period for acquiring the fault information of the vehicle is the same as a period for calculating a dynamic compensation. It can be understood that within the same period, the request charging current value, the actual charging current value, the consumed current value of the accessory, and the fault information of the vehicle are acquired. the fault information of the vehicle may be acquired by real-time acquiring message information uploaded by the vehicle, and determining after the message information is classified and analyzed. It can be foreseen that the fault information includes fault information that affects vehicle charging and fault information that does not affect vehicle charging. The fault information that affects vehicle charging, such as a charging interface fault, battery damage, etc. The fault information that does not affect vehicle charging includes, for example, a charging voltage below a rated voltage, charging when a power of the vehicle is turned on, etc. The fault information that does not affect vehicle charging further includes information that affects the consumed current value of the accessories, such as charging when the power of the vehicle is turned on, information of a compressor current value, and information of a DC-DC converter current value. Thus, it may be synchronously determined whether to adjust the charging current based on the fault information.

At step S 100-2, it is checked whether the fault information includes the charging fault information. This checking process is checked by means of establishing a whitelist, such as the charging interface fault, the battery damage, etc.

At step S 100-3, in response to the fault information not including the charging fault information, it is continued to acquire the request charging current value of the battery and the actual charging current value of the battery, and determine the vehicle charging current value based on the request charging current value of the battery and the actual charging current value of the battery.

At step S 100-4, in response to the fault information including the information that affects the consumed current value of the accessories, the consumed current value of the accessories is calculated based on the information that affects the consumed current value of the accessories, and the vehicle charging current value is determined based on the consumed current value of the accessories. Calculating the consumed current value of the accessories based on the fault information includes, for example, calculating the consumed current value of the accessories by acquiring a current loss value at a certain leakage position, a resistance consumption current value, etc.

As an optional implementation, the information that affects the consumed current value of the accessories includes frame dropping information of at least one high voltage electrical component and/or frame dropping information of at least one low voltage electrical component. The high voltage electrical component includes, but is not limited to, a PTC, a compressor, etc., and the low voltage electrical component includes, but is not limited to, a DCDC, etc. the DCDC is a power supply for all low voltage DC electrical components, which is configured to convert a power supply of a charging gun or a power battery into a direct current and transmit the direct current to other electrical components.

Calculating the consumed current value of the accessories based on the information that affects the consumed current value of the accessories includes: calculating the consumed current value of the accessories based on the at least one high voltage electrical component and/or the at least one low voltage electrical component, and a component with normally receiving a consumption current. The component with normally receiving the consumption current refers to an accessory circuit component that has not dropped the frame.

As an optional implementation, calculating the consumed current value of the accessories based on the at least one high voltage electrical component and/or the at least one low voltage electrical component, and the component with normally receiving the consumption current includes: acquiring a consumed current value of the component with normally receiving the consumption current; acquiring a previous consumed current value of the at least one high voltage electrical component and/or the at least one low voltage electrical component, in which, since the frame dropping has been occurred on the at least one high voltage electrical component and/or the at least one low voltage electrical component at the present time, the present consumed value cannot be obtained. The consumed current value of the accessories can be calculated by obtaining the previous consumed current value; finally, determining a sum of the consumed current value of the component with normally receiving the consumption current and the previous consumed current value of the at least one high voltage electrical component and/or the at least one low voltage electrical component as the consumed current value of the accessories.

At step S 100-5, in response to the fault information including the charging fault information, an instruction for terminating charging is sent to a charging station to terminate the charging of the battery. This process avoids damage to the vehicle or the charging station caused by charging even when there is a fault. Furthermore, the process further includes, in response to a message transmitted by the accessories being not received and the fault information including the charging fault information, charging the battery is terminated.

The accessory circuit communicates with the vehicle control unit through the message. The accessory circuit refers to peripheral circuits outside of the battery itself, which is usually used for functions such as voltage reduction and current limiting. The message includes the consumed current value of the accessory. It can be understood that the vehicle control unit periodically receives the messages transmitted by the accessories and obtains the consumed current value of the accessories by parsing the messages.

When the message is not received due to temporary communication interruption, it will not affect the vehicle control unit to dynamically adjust the charging current. However, when no message is received and the fault information includes the charging fault information, the charging of the battery is terminated, which may ensure effectiveness of charging, avoid damage to the vehicle and economic losses to users caused by ineffective charging.

According to the method for adjusting the vehicle charging current provided in embodiments of the present disclosure, the current adjustment value is obtained based on the request charging current value and the actual charging current value, whether the consumed current value of the accessories is consistent with an actually consumed current is checked based on the current adjustment value. In response to the consumed current value of the accessories being inconsistent with the actually consumed current, the charging current requested by the vehicle is dynamically compensated. In response to the actual current of the battery being greater than the request current of the battery, a compensation value may cause the battery to be prevented from overcharge. In response to the actual current of the battery being less than the request current of the battery, the compensation value may cause a charging time to be reduced and a charging rate to be improved. In a case that a message for a calculated current of the accessories occurs frame dropping, nodes communicate normally, and the vehicle allows charging, the charging can still be performed, improving the charging rate and user experience.

### Embodiment five:

Corresponding to the first embodiment provided in the present disclosure, the present disclosure also provides a fifth embodiment, which is an apparatus for adjusting a vehicle charging current. Since the fifth embodiment is basically similar to the first to fourth embodiments, the description is relatively simple. Please refer to the corresponding explanations of the first to fourth embodiments for relevant parts. The apparatus embodiments described below are only illustrative.

As illustrated in FIG. 4, the present disclosure provides an apparatus for adjusting a vehicle charging current. The apparatus includes the following units.

An acquiring unit 401 is configured to acquire a request charging current value and an actual charging current value of a battery.

A determining unit 402 is configured to determine a current adjustment value of the battery based on the request charging current value and the actual charging current value.

A checking unit 403 is configured to check whether an absolute value of the current adjustment value is greater than a preset adjustment threshold.

An adjusting unit 404 is configured to, in response to the absolute value of the current adjustment value being greater than the preset adjustment threshold, determine a vehicle charging current value based on the request charging current value, the current adjustment value and a consumed current value of accessories, in which, the consumed current value of the accessories is a current value consumed by circuits other than the battery.

Alternatively, the adjusting unit 401 is further configured to: in response to the absolute value of the current adjustment value being greater than the preset adjustment threshold, determine that the vehicle charging current value is equal to a sum of the request charging current value of the battery, the current adjustment value, and the consumed current value of the accessories.

Alternatively, the adjusting unit 401 is further configured to: in response to the absolute value of the current adjustment value being less than or equal to the preset adjustment threshold, determine that the vehicle charging current value is equal to a sum of the request charging current value of the battery and the consumed current value of the accessories.

Alternatively, the apparatus further includes a diagnosis unit (not shown). The diagnosis unit is configured to: acquire fault information of the vehicle, in which, the fault information includes information that affects the consumed current value of the accessories or charging fault information; check whether the fault information includes the charging fault information; in response to the fault information including the charging fault information, send an instruction for terminating charging the battery.

Alternatively, the diagnostic unit is further configured to acquire the request charging current value of the battery and the actual charging current value of the battery in response to the fault information not including the charging fault information.

Alternatively, the diagnosis unit is further configured to: in response to the fault information including the information that affects the consumed current value of the accessories, calculate the consumed current value of the accessories based on the information that affects the consumed current value of the accessories.

As an optional implementation, the information that affects the consumed current value of the accessories includes frame dropping information of at least one high voltage electrical component and/or frame dropping information of at least one low voltage electrical component. Calculating the consumed current value of the accessories based on the information that affects the consumed current value of the accessories includes: calculate the consumed current value of the accessories based on the at least one high voltage electrical component and/or the at least one low voltage electrical component, and a component with normally receiving a consumption current.

As an optional implementation, calculating the consumed current value of the accessories based on the at least one high voltage electrical component and/or the at least one low voltage electrical component, and the component with normally receiving the consumption current includes: acquiring a consumed current value of the component with normally receiving the consumption current; acquiring a previous consumed current value of the at least one high voltage electrical component and/or the at least one low voltage electrical component; determining a sum of the consumed current value of the component with normally receiving the consumption current and the previous consumed current value of the at least one high voltage electrical component and/or the at least one low voltage electrical component as the consumed current value of the accessories.

According to the apparatus for adjusting the vehicle charging current provided in embodiments of the present disclosure, the current adjustment value is obtained based on the request charging current value and the actual charging current value, whether the consumed current value of the accessories is consistent with an actually consumed current is checked based on the current adjustment value. In response to the consumed current value of the accessories being inconsistent with the actually consumed current, the charging current requested by the vehicle is dynamically compensated. In response to the actual current of the battery being greater than the request current of the battery, a compensation value may cause the battery to be prevented from overcharge. In response to the actual current of the battery being less than the request current of the battery, the compensation value may cause a charging time to be reduced and a charging rate to be improved. In a case that a message for a calculated current of the accessories occurs frame dropping, nodes communicate normally, and the vehicle allows charging, the charging can still be performed, improving the charging rate and user experience.

### Embodiment six

The present disclosure also provides a sixth embodiment, which is a vehicle control unit, having one or more instructions stored thereon. The one or more instructions is configured to implement the method as described in any one of the first to fourth embodiments when executed by the vehicle control unit.

### Embodiment seven

The present disclosure also provides a seventh embodiment, which is a vehicle, including the vehicle control unit as described in the sixth embodiment.

The above description is only a preferred embodiment of the present disclosure and an explanation of the technical principles used. Those skilled in the art should understand that the scope of the present disclosure is not limited to technical solutions formed by specific combinations of the aforementioned technical features, but also covers other technical solutions formed by any combinations of the aforementioned technical features or their equivalent features without departing from the concept of the aforementioned disclosure. For example, a technical solution formed by replacing the above features with (but not limited to) technical features having similar functions disclosed in the present disclosure.

Furthermore, although operations are depicted in a specific order, this should not be understood as requiring these operations to be executed in the specific order as shown or in a sequential order. In certain environments, multitasking and parallel processing may be advantageous. Similarly, although several specific implementation details are included in the above discussion, these should not be understood as limiting the scope of the present disclosure. Some features described in the context of individual embodiments can also be combined and implemented in a single embodiment. On the contrary, various features described in the context of a single embodiment can also be implemented individually or in any suitable sub combination in multiple embodiments.

Although the subject matter has been described in language specific to structural features and/or method logical actions, it should be understood that the subj ect matter limited in the appended claims may not necessarily be limited to the specific features or actions described above. On the contrary, the specific features and actions described above are only illustrative forms of implementing the claims.

## Claims

1. A method for adjusting a vehicle charging current, comprising:
acquiring a request charging current value and an actual charging current value of a battery;
determining a current adjustment value of the battery based on the request charging current value and the actual charging current value;
checking whether an absolute value of the current adjustment value is greater than a preset adjustment threshold; and
in response to the absolute value of the current adjustment value being greater than the preset adjustment threshold, determining a vehicle charging current value based on the request charging current value, the current adjustment value and a consumed current value of accessories, wherein the consumed current value of the accessories is a current value consumed by circuits other than the battery.

2. The method according to claim 1, wherein, in response to the absolute value of the current adjustment value being greater than the preset adjustment threshold, determining the vehicle charging current value based on the request charging current value, the current adjustment value and the consumed current value of the accessories comprises:
in response to the absolute value of the current adjustment value being greater than the preset adjustment threshold, determining that the vehicle charging current value is equal to a sum of the request charging current value of the battery, the current adjustment value, and the consumed current value of the accessories.

3. The method according to claim 1, further comprising:
in response to the absolute value of the current adjustment value being less than or equal to the preset adjustment threshold, determining that the vehicle charging current value is equal to a sum of the request charging current value of the battery and the consumed current value of the accessories.

4. The method according to any one of claims 1 to 3, before acquiring the request charging current value and the actual charging current value of the battery, further comprising:
acquiring fault information of the vehicle, wherein the fault information comprises information that affects the consumed current value of the accessories or charging fault information;
checking whether the fault information comprises the charging fault information; and
in response to the fault information comprising the charging fault information, sending an instruction for terminating charging the battery.

5. The method according to claim 4, further comprising:
in response to the fault information comprising the information that affects the consumed current value of the accessories, calculating the consumed current value of the accessories based on the information that affects the consumed current value of the accessories.

6. The method according to claim 5, wherein the information that affects the consumed current value of the accessories comprises frame dropping information of at least one high voltage electrical component and/or frame dropping information of at least one low voltage electrical component;
calculating the consumed current value of the accessories based on the information that affects the consumed current value of the accessories comprises: calculating the consumed current value of the accessories based on the at least one high voltage electrical component and/or the at least one low voltage electrical component, and a component with normally receiving a consumption current.

7. The method according to claim 6, wherein calculating the consumed current value of the accessories based on the at least one high voltage electrical component and/or the at least one low voltage electrical component, and the component with normally receiving the consumption current comprises:
acquiring a consumed current value of the component with normally receiving the consumption current;
acquiring a previous consumed current value of the at least one high voltage electrical component and/or the at least one low voltage electrical component; and
determining a sum of the consumed current value of the component with normally receiving the consumption current and the previous consumed current value of the at least one high voltage electrical component and/or the at least one low voltage electrical component as the consumed current value of the accessories.

8. An apparatus for adjusting a vehicle charging current, comprising:
an acquiring unit, configured to acquire a request charging current value and an actual charging current value of a battery;
a determining unit, configured to determine a current adjustment value of the battery based on the request charging current value and the actual charging current value;
a checking unit, configured to check whether an absolute value of the current adjustment value is greater than a preset adjustment threshold; and
an adjusting unit, configured to, in response to the absolute value of the current adjustment value being greater than the preset adjustment threshold, determine a vehicle charging current value based on the request charging current value, the current adjustment value and a consumed current value of accessories, wherein the consumed current value of the accessories is a current value consumed by circuits other than the battery.

9. The apparatus according to claim 8, wherein the adjusting unit is further configured to:
in response to the absolute value of the current adjustment value being greater than the preset adjustment threshold, determine that the vehicle charging current value is equal to a sum of the request charging current value of the battery, the current adjustment value, and the consumed current value of the accessories.

10. The apparatus according to claim 8, wherein the adjusting unit is further configured to:
in response to the absolute value of the current adjustment value being less than or equal to the preset adjustment threshold, determine that the vehicle charging current value is equal to a sum of the request charging current value of the battery and the consumed current value of the accessories.

11. The apparatus according to any one of claims 8 to 10, further comprising a diagnosis unit, configured to:
acquire fault information of the vehicle, wherein the fault information comprises information that affects the consumed current value of the accessories or charging fault information;
check whether the fault information comprises the charging fault information; and
in response to the fault information comprising the charging fault information, send an instruction for terminating charging the battery.

12. The apparatus according to claim 11, wherein the diagnosis unit is further configured to:
in response to the fault information comprising the information that affects the consumed current value of the accessories, calculate the consumed current value of the accessories based on the information that affects the consumed current value of the accessories.

13. The apparatus according to claim 12, wherein the information that affects the consumed current value of the accessories comprises frame dropping information of at least one high voltage electrical component and/or frame dropping information of at least one low voltage electrical component;
the diagnosis unit is further configured to: calculate the consumed current value of the accessories based on the at least one high voltage electrical component and/or the at least one low voltage electrical component, and a component with normally receiving a consumption current.

14. A vehicle control unit, having one or more instructions stored thereon, wherein the one or more instructions is configured to implement the method according to any one of claims 1 to 7 when executed by the vehicle control unit.

15. An electric vehicle, comprising the vehicle control unit according to claim 14.
